Europäisches Patentamt

European Patent Office

Office européen des brevets

(19)

(11) **EP 0 857 368 B1**

(12) **EUROPÄISCHE PATENTSCHRIFT**

(45) Veröffentlichungstag und Bekanntmachung des Hinweises auf die Patenterteilung:
**03.02.1999 Patentblatt 1999/05**

(21) Anmeldenummer: **96944665.7**

(22) Anmeldetag: **27.12.1996**

(51) Int Cl.⁶: **H02H 7/085**, **E05F 15/00**

(86) Internationale Anmeldenummer:
**PCT/EP96/05850**

(87) Internationale Veröffentlichungsnummer:
**WO 97/26694 (24.07.1997 Gazette 1997/32)**

(54) **VERFAHREN ZUM STEUERN EINES GLEICHSTROMANTRIEBS**

METHOD OF CONTROLLING A DIRECT CURRENT DRIVE

PROCEDE DE COMMANDE D'UN SYSTEME D'ENTRAINEMENT A COURANT CONTINU

(84) Benannte Vertragsstaaten:
**AT CH DE DK FI FR GB IT LI SE**

(30) Priorität: **16.01.1996 DE 19601359**

(43) Veröffentlichungstag der Anmeldung:
**12.08.1998 Patentblatt 1998/33**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **GRINEWITSCHUS, Viktor**
  **D-46485 Wesel (DE)**
• **RAFFEL, Dirk**
  **D-47055 Duisburg (DE)**

(74) Vertreter: **Schoppe, Fritz, Dipl.-Ing.**
**Schoppe & Zimmermann,**
**Patentanwälte,**
**Postfach 71 08 67**
**81458 München (DE)**

(56) Entgegenhaltungen:
EP-A- 0 692 856         EP-A- 0 714 052
DE-A- 4 000 730         DE-A- 4 214 998
DE-U- 9 202 631         US-A- 5 334 876
US-A- 5 418 440

**Beschreibung**

Die vorliegende Erfindung betrifft ein Verfahren zum Steuern eines Gleichstromantriebs, insbesondere eines Gleichstromtorantriebs.

An die Steuerung von Gleichstromantrieben, die beispielsweise zum Öffnen bzw. Schließen von Türen, Garagentoren, elektrischen Schiebedächern und dergleichen eingesetzt werden, werden hohe Sicherheitsanforderungen gestellt. Diese Sicherheitsanforderungen schließen das Erkennen von Gefahrensituationen ein. Befindet sich z.B. im Fahrweg bzw. Laufweg des zu betätigenden Elements, wie z.B. einem Garagentor, ein Hindernis, so muß umgehend eine Abschaltung oder ein Reversieren des Tores eingeleitet werden. Zur Vermeidung von Beschädigungen und Verletzungen dürfen die dabei an der Torkante auftretenden äußeren Kräfte bestimmte Grenzwerte nicht überschreiten. Solche Grenzwerte sind vom Gesetzgeber vorgeschrieben. Darüber hinaus ist man bemüht, durch spezielle Verfahren die real auftretenden Kräfte so niedrig wie möglich zu halten.

Bei den im Stand der Technik bekannten Verfahren zur Steuerung von Gleichstromantrieben wird der an dem Gleichstromantrieb anliegende Motorstrom mit einem absoluten Grenzwert oder mit erfaßten Referenzwerten verglichen.

Bei einem ersten bekannten Verfahren zur Steuerung eines Gleichstromantriebs wird der Motorstrom mit einem absolut vorgegebenen konstanten Grenzwert verglichen. Sobald der aktuelle Motorstrom einen voreingestellten Absolutwert übersteigt, wird der Gleichstromantrieb abgeschaltet. Der Nachteil dieses ersten bekannten Verfahrens besteht darin, daß die maximale Antriebsleistung stark eingeschränkt ist. Ein weiteres Problem dieses bekannten Verfahrens stellt sich dann, wenn der Kraftbedarf eines Tores stark von der Torposition abhängig ist. In diesem Fall existieren Positionen, an denen die Kraft an der Torkante die zulässigen Werte überschreiten kann, ohne daß der Gleichstromantrieb abgeschaltet wird.

Um die oben beschriebenen Probleme zu vermeiden, wurde ein zweites im Stand der Technik bekanntes Verfahren entwickelt, das aus der DE 4214998 A1 bekannt ist, bei dem der am Gleichstromantrieb anliegende Motorstrom mit einem durch eine Lernfahrt in Abhängigkeit von der Torposition ermittelten Strom verglichen wird. Bei diesem auf Referenzmessungen basierenden Verfahren wird der erforderliche Motorstrom oder die Sollgeschwindigkeit für verschiedene Positionen bei einer ungestörten Fahrt des Tores gemessen und als Referenzwert gespeichert. Unzulässige Abweichungen von den gespeicherten Referenzwerten führen bei nachfolgenden Fahrten dann zu einer Abschaltung. Ein Problem dieses bekannten Verfahrens besteht jedoch darin, daß in dem Fall, in dem ein Tor zwischen den Endpunkten einer Fahrt (dem Punkt an dem das Tor geschlossen ist bzw. dem Punkt an dem das Tor offen ist), gestoppt wird und anschließend wieder gestartet wird, beim erneuten Startens ein hoher Anlaufstrom auftritt. Für diesen hohen Anlaufstrom an einer Position zwischen den beiden Endpunkten sind keine Referenzwerte vorhanden. Um in diesem Fall das Abschalten oder Reversieren des Tores zu vermeiden, müssen bei diesem Verfahren in Abhängigkeit vom jeweiligen Anwendungsfall erhöhte Grenzwerte für einen zulässigen Betrieb des Tores vorgesehen werden. Eine andere Möglichkeit, das Überschreiten der Grenzwerte zu vermeiden besteht darin, die Überwachung während der Zeit des Anlaufens außer Kraft zu setzen.

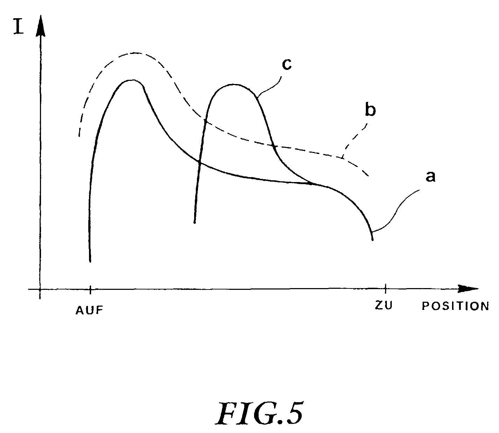

Die oben angesprochene Problematik beim Wiederanfahren eines Tores nach einem Stop in einer Position zwischen den beiden Endpositionen wird anhand des in Fig. 5 dargestellten Graphs verdeutlicht. Wie Fig. 5 zu entnehmen ist, ist dort der erforderliche Motorstrom über die Position eines Tores aufgezeichnet. Genauer gesagt ist der erforderliche Motorstrom über dem Bereich, zwischen dem das Tor geöffnet und das Tor geschlossen ist, aufgezeichnet. Der Verlauf a) stellt den Motorstromverlauf bei einer sogenannten Normalfahrt dar. Für diese Normalfahrt wurden während der Lernfahrt Referenzwerte ermittelt, auf die ein vorbestimmter Toleranzwert aufgeschlagen wurde, wodurch sich der Grenzwertverlauf b) ergibt wie er in Fig. 5 dargestellt ist. Der Verlauf c) zeigt nun die Problematik, die auftritt, wenn ein Tor an einer beliebigen Position zwischen den beiden Endpositionen angehalten wurde und daraufhin erneut angefahren werden soll. In diesem Fall steigt der erforderliche Motorstrom stark an, so daß der den Grenzwertverlauf b) deutlich überschreiten würde. Um dieses Problem zu vermeiden, muß der Grenzwertverlauf so gewählt sein, daß auch bei einem Anfahren nach einem Anhalten zwischen den Endpositionen ein Abschalten des Gleichstromantriebs durch den hohen Motorstrom beim Wiederanfahren sicher vermieden werden kann. Dies führt jedoch zu dem Problem, daß sehr hohe Grenzwertverläufe b) ausgewählt werden müssen, was in dem Fall, daß während eines Torlaufs ein Hindernis angetroffen wird, eine Abschaltung oder ein Reversieren des Tores erst nach einer relativ langen Zeit eingeleitet wird. Dies kann in einem Fall zu einer Beschädigung des Gleichstromantriebs aufgrund einer Überlastung führen. In einem anderen, wesentlich kritischeren Fall, in dem ein Mensch das oben erwähnte Hindernis darstellt, kann die durch die erhöhten Grenzwerte erst verspätet bewirkte Abschaltung zu erheblichen Verletzungen des menschlichen Körpers führen.

Die US-A-5,418,440 betrifft eine Positionssteuerung für einen Servomotor, die bei einer Störung den Motor anhält. Die Steuerung gibt ein Warnsignal aus, wenn ein Störungsdrehmoment erfaßt wird, das einen zulässigen Wert übersteigt. Die Bestimmung des Überschreitens des zulässigen Störungsdrehmoments erfolgt auf der Grundlage eines Geschwindigkeitssignals.

Ausgehend von diesem Stand der Technik liegt der vorliegenden Erfindung die Aufgabe zugrunde, ein Verfahren zum Ansteuern eines Gleichstromantriebs zu schaffen, das eine zuverlässige Detektion von Störungen bei niedrigen Grenzwerten ermöglicht.

Diese Aufgabe wird durch ein Verfahren gemäß Patentanspruch 1 oder Patentanspruch 2 gelöst.

Ein Vorteil der vorliegenden Erfindung besteht darin, daß eine zuverlässige Erfassung von Störungen bereits bei wesentlich niedrigeren Grenzwerten ermöglicht wird, da das erfindungsgemäße Verfahren auch zuverlässig in den Fällen funktioniert, bei denen bei den bekannten Verfahren die oben angeführten Probleme auftreten.

Ein weiterer Vorteil besteht darin, daß anhand eines analytischen, dynamischen Modells eines Antriebssystems aus den am Gleichstromantrieb erfaßbaren Kenngrößen, wie z.B. dem Motorstrom, der Position, das auf den Antrieb wirkende Last- oder Widerstandsmoment exakt berechnet werden kann. Dies ermöglicht es, auftretende Trägheits- sowie Reibungseffekte zu berücksichtigen und zu kompensieren, wodurch die erforderliche Schwelle für die Erkennung einer abnormen Situation oder Gefahrensituation, wie beispielsweise eine Blockierung des Fahrtweges eines Tores, deutlich gesenkt werden kann.

Gemäß einem weiteren Vorteil der vorliegenden Erfindung verwendet das erfindungsgemäße Verfahren den Motorstrom lediglich als Hilfsgröße, zu der weitere physikalische Aspekte rechnerisch berücksichtigt werden, wie z. B. eine Position eines Tores, sowie die Geschwindigkeit und die Beschleunigung eines Tores. Somit ist das erfindungsgemäße Verfahren auch in der Lage, den Anlaufstrom nach einem Stop des Tores an einer Mittelposition entsprechend zu berücksichtigen, was zu einer größeren Betriebssicherheit bei kleiner eingestellten Grenzlastwerten führt.

Bevorzugte Weiterbildungen der vorliegenden Erfindung sind in den Unteransprüchen definiert.

Nachfolgend werden anhand der beiliegenden Zeichnungen bevorzugte Ausführungsbeispiele der vorliegenden Erfindung näher erläutert. Es zeigen:

Fig. 1      ein Ersatzschaltbild eines Gleichstromantriebs;

Fig. 2      einen Graph, der den Motorstromverlauf, den Drehzahlverlauf und den Last- oder Widerstandsmomentverlauf über der Zeit bei einem Antrieb mit konstanter Geschwindigkeit darstellt;

Fig. 3      einen Graph, der den Motorstromverlauf, den Drehzahlverlauf und den Last- oder Widerstandsmomentverlauf bei einem Antrieb mit variabler Geschwindigkeit über der Zeit darstellt;

Fig. 4      einen Graph, der die Messung des Motorstroms, der Motordrehzahl und des Last- oder Widerstandsmoments bei Messungen an einem Garagentorantrieb mit einer sprunghaften Erhöhung des Last- oder Widerstandsmoments darstellt;

Fig. 5      den Motorstromverlauf bei einer Normalfahrt und beim Wiederanfahren nach einem Halten zwischen den Endpositionen gemäß einem Verfahren aus dem Stand der Technik.

Das erfindungsgemäße Verfahren beruht darauf, daß anhand eines analytischen, dynamischen Modells eines Antriebssystems aus den am Gleichstromantrieb erfaßbaren Kenngrößen das auf den Antrieb wirkende Last- oder Widerstandsmoment exakt berechnet wird. Dies ermöglicht es, auftretende Trägheits- und Reibungseffekte zu berücksichtigen und zu kompensieren, wodurch die erforderliche Schwelle für die Erkennung einer Gefahrensituation durch eine Blockierung des Fahrweges, wie sie beispielsweise bei einem Garagentorantrieb auftritt, deutlich gesenkt werden kann.

Da die exakten Parameter eines solchen Modells in der Regel nicht bekannt sind, wird im nachfolgenden beschrieben, wie diese aus wenigen Lernfahrten mit hinreichender Genauigkeit ermittelbar sind. Die für die Durchführung des Verfahrens erforderliche Informationsverarbeitung wird in der Regel von den in moderneren Antrieben zur Steuerung eingesetzten Mikrosteuerungen bzw. Mikrocontrollern übernommen.

Da die oben erwähnten Mikrosteuerungen bzw. Mikrocontroller nur eine begrenzte Rechenkapazität aufweisen, wird nachfolgend ebenfalls ein Verfahren dargestellt, das auf eine niedrige erforderliche Rechenleistung optimiert ist.

Bei dem erfindungsgemäßen Verfahren werden in einem ersten Schritt zwei Zustandsgrößen des Gleichstromantriebs erfaßt und anschließend wird ein an dem Gleichstromantrieb anliegendes Last- oder Widerstandsmoment bestimmt. Nachfolgend wird das bestimmte Last- oder Widerstandsmoment mit einem vorbestimmten Last- oder Widerstandsmoment verglichen und eine abnorme Situation festgestellt, wenn das bestimmte Last- oder Widerstandsmoment das vorbestimmte Last- oder Widerstandsmoment überschreitet.

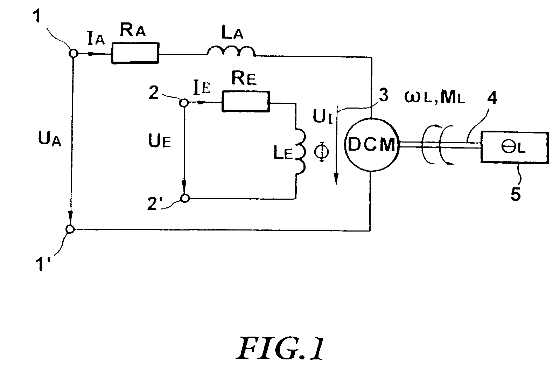

Nachfolgend wird ein bevorzugtes Ausführungsbeispiel näher erläutert, und es wird dargestellt, wie das an dem Gleichstromantrieb wirkende Last- oder Widerstandsmoment bestimmt wird. Ferner wird dargelegt, wie die zu der Bestimmung des Last- oder Widerstandsmoments erforderlichen Zustandsgrößen und Parameter des Gleichstromantriebs und des durch den Gleichstromantrieb angetriebenen Elements bestimmt werden. Zur Bestimmung des Last- oder Widerstandsmoments das auf den Gleichstromantrieb wirkt, geht die vorliegende Erfindung von der nachfolgend beschriebenen Modellierung eines Antriebssystems aus. In Fig. 1 ist ein elektromechanisches Ersatzschaltbild eines Gleichstromantriebs dargestellt. Es wird darauf hingewiesen, daß die Elemente des Ankerkreises mit dem Index A versehen sind, wohingegen die Elemente des Erregerkreises mit dem Index E versehen sind.

Der Ankerkreis weist zwei Anschlußklemmen 1, 1' auf, zwischen denen die Ankerspannung $U_A$ anliegt. Die Anschlußklemme 1 ist über den Widerstand $R_A$ und die Induktivität $L_A$ mit einem Anschluß eines Gleichstrommotors DCM verbunden. Der andere Anschluß des Gleichstrommotors ist mit der Klemme 1' des Ankerkreises verbunden. Im Ankerkreis fließt der Strom $I_A$.

Der Erregerkreis umfaßt zwei Klemmen 2, 2', zwischen denen die Erregerspannung $U_E$ anliegt. Der Widerstand $R_E$ stellt den Widerstand der Erregerwicklung dar, und die Induktivität $L_E$ stellt die Induktivität der Erregerwicklung dar. Im Erregerkreis fließt der Strom $I_E$.

$U_I$ (durch den Pfeil 3 bezeichnet) stellt die drehzahlabhängige Gegen-EMK des Motors DCM dar.

Der Motor DCM umfaßt eine Ausgangswelle 4, die mit einer Last 5 verbunden ist. In der Regel ist die Last über ein Getriebe mit dem Motor verbunden. Die Ausgangswelle des Motors wird im folgenden als Antriebswelle bezeichnet, und die Ausgangswelle des Getriebes wird als Abtriebswelle bezeichnet. $\omega_A$ bezeichnet hierbei die Drehzahl der Antriebswelle.

$M^*_L$ stellt das auf die Antriebswelle umgerechnete Lastmoment dar und $\theta^*_L$ bezeichnet das auf die Antriebswelle umgerechnete Trägheitsmoment der Last.

Aus dem in Fig. 1 dargestellten Ersatzschaltbild des Gleichstromantriebes können die nachfolgenden Differentialgleichungen für den Erregerkreis und den Ankerkreis ermittelt werden.

$$U_E = R_E I_E + L_E \frac{\partial I_E}{\partial t} \tag{1}$$

$$U_A = R_A I_A + L_A \frac{\partial I_A}{\partial t} + U_I \tag{2}$$

Für die induzierte Spannung $U_I$ ergibt sich die nachfolgende Gleichung:

$$U_I = \frac{z}{a} p n_a \phi = k_1 n_a \phi \tag{3}$$

mit:

$n_A =$   Drehzahl der Antriebswelle 4;
$\Phi =$   magnetischer Fluß eines einzelnen Pols durch die Spulen;
$z =$   die Anzahl der Ankerleiter
$a =$   Anzahl der Ankerzweige
$b =$   Anzahl der Polpaare.

Die Gleichung (3) kann wie folgt umgeformt werden:

$$U_I = k_1 \frac{\omega_A}{2\pi} \phi = k_2 \omega_A \phi \tag{4}$$

Ferner läßt sich für das innere Drehmoment (Luftspaltmoment) der Gleichstrommaschine die nachfolgende Beziehung angeben:

$$M_I = k_2 \phi I_A \tag{5}$$

Die Bewegungsdifferentialgleichung lautet in vereinfachter Form:

$$M_I = \overset{*}{M}_{W,ges} + \theta_{A,ges}\, \frac{\partial \omega_A}{\partial t} \tag{6}$$

mit

$M_I =$        inneres Drehmoment (Luftspaltmoment),

$M^*_{W,ges} =$        Widerstandsmoment, bezogen auf die Antriebswelle

$\theta_{A,ges} =$        gesamtes Massenträgheitsmoment, bezogen auf die Antriebswelle.

Unter Einbeziehung des Zusammenhangs aus Gleichung (5) folgt hieraus die nachfolgende Gleichung:

$$k_2 \phi I_A = \overset{*}{M}_{W,ges} + \theta_{A,ges}\, \frac{\partial \omega_A}{\partial t} \tag{7}$$

Zusammenfassend ergibt sich der nachfolgende Satz von Differentialgleichungen, die das dynamische Verhalten eines Gleichstromantriebs beschreiben:

$$k_2 \phi I_A = \overset{*}{M}_{W,ges} + \theta_{A,ges}\, \frac{\partial \omega_A}{\partial t} \tag{8}$$

$$U_A = R_A I_A + k_2 \phi \omega_A + L_A\, \frac{\partial I_A}{\partial t} \tag{9}$$

$$U_E = R_E I_E + L_E\, \frac{\partial I_E}{\partial t} \tag{10}$$

Bei Betrachtung des stationären Verhaltens kann der Gleichstromantrieb durch die nachfolgenden Gleichungen beschrieben werden:

$$k_2 \phi I_A = \overset{*}{M}_{W,ges} \tag{11}$$

$$U_A = R_A I_A + k_2 \phi \omega_A \tag{12}$$

$$U_E = R_E I_E \tag{13}$$

Bei einem konstant fremderregten Gleichstrommotor, die bei den meisten Antrieben verwendet werden, führen die nachfolgenden Überlegungen zu einer Vereinfachung des oben ausgeführten Differentialgleichungssystems:

Bei konstant fremderregten Gleichstrommotoren liegt der Erregerkeis an einer eigenen, unabhängigen Gleichspannungsquelle bzw. erfolgt die Erregung durch einen Permanentmagneten. Daher kann von einem konstanten magnetischen Fluß e ausgegangen werden, der durch variable Lastmomente oder elektrische Steuerungsmaßnahmen nicht beeinflußt wird. Somit ergibt sich für die Beschreibung des stationären und dynamischen Verhaltens eines konstant erregten Gleichstrommotors ein lineares, analytisch lösbares System aus den nachfolgenden zwei Differentialgleichungen:

$$k_2 \phi I_A = \overset{*}{M}_{W,ges} + \theta_{A,ges}\, \frac{\partial \omega_A}{\partial t} \tag{14}$$

$$U_A = R_A I_A + k_2 \phi \omega_A + L_A \frac{\partial I_A}{\partial t} \tag{15}$$

In dem oben angeführten Differentialgleichungssystem stellen die Ankerspannung $U_A$ und das Widerstandsmoment $M^*_{W,ges}$ die mathematischen Störgrößen dar, wobei der Ankerstrom $I_A$ die Winkelgeschwindigkeit $\omega_A$ die Zustandsgrößen des Systems sind. Das aktuelle Widerstandsmoment ergibt sich aus der Lösung dieses Differentialgleichungssystems unter Verwendung der direkt am Motor erfaßbaren Größen $U_A$, $I_A$ und $\omega$.

Zur Lösung des durch die Gleichungen (14) und (15) bestimmten Differentialgleichungssystems ist es erforderlich, die notwendigen Parameter des Modells zu bestimmen.

Ein erster Parameter ist die Motorkonstante $k_3\theta$, die eine direkte Kenngröße des Motors ist. Somit kann dieser Parameter direkt bei der Entwicklung des Gleichstromantriebs bestimmt und als lastunabhängige Konstante in der Rechnung verwendet werden. Ausgangspunkt für die Bestimmung der Motorkonstante ist die nachfolgende Gleichung für das innere Drehmoment einer Gleichstrommaschine:

$$M_I = k_2 \phi I_A \tag{16}$$

$$\Rightarrow \ddot{u} M_I = \ddot{u} k_2 \phi I_A = k_3 \phi I_A \tag{17}$$

mit:
ü = Übersetzungsverhältnis des Getriebes.

Das Bilden der partiellen Ableitung nach dem Ankerstorm ergibt:

$$\frac{\partial}{\partial I_A} \ddot{u} M_I = k_3 \phi \tag{18}$$

$$\Rightarrow k_3 \phi = \frac{\partial (\ddot{u} M_I)}{\partial I_A} \approx \frac{\Delta (\ddot{u} M_I)}{\Delta I_A} \tag{19}$$

Mit der abgeleiteten Beziehung gemäß Gleichung (19) läßt sich somit für eine gegebene Kennlinie $I_A = f(M_I)$ die Motorkonstante auf einfache Weise quantitativ bestimmen.

Die Winkelgeschwindigkeit wird mittels einer digitalen Drehzahlmessung erfaßt. Zur Drehzahlmessung kann beispielsweise ein inkrementaler Geber benutzt werden, der eine festgelegte Anzahl von Impulsen je Umdrehung vorgibt. Die Impulsfrequenz $f_I$ kann auf die nachfolgend dargestellte Art bestimmt werden:

$$T_L = k \cdot T_I \tag{20}$$

$$\Rightarrow f_L = \frac{1}{k} \cdot f_I \tag{21}$$

Das Auftreten eines Impulses im Ausgangssignale des inkrementalen Gebers löst in der Mikrosteuerung einen Interrupt (Unterbrechung) aus. Bei einer entsprechenden Programmierung der Routine zur Behandlung dieses Interrupts können diese Impulse in einem Zähler aufsummiert werden.

Das Einzählen in den Zähler während der Zeit $T_M$ liefert für die Impulsanzahl z die folgende Gleichung:

$$z = \int_{t_0 - \frac{T_M}{2}}^{t_0 + \frac{T_M}{2}} f_I \, dt = k \int_{t_0 - \frac{T_M}{2}}^{t_0 + \frac{T_M}{2}} f_L \, dt = k T_M \overline{f_L} \tag{22}$$

mit:

$$\overline{f_L} = \frac{1}{T_M} \int_{t_0 - \frac{T_M}{2}}^{t_0 + \frac{T_M}{2}} f_L \, dt \qquad (23)$$

Gemäß der Gleichung (23) stellt $\overline{f_L}$ die mittlere Drehzahl der Abtriebswelle des Motors in dem Intervall $[t_0 - T_M/2, t_0 + T_M/2]$ dar.

Für den Mittelwert der Winkelgeschwindigkeit $\overline{\omega}_L$ folgt aus der Gleichung (22):

$$\overline{\omega_L} = 2\pi \overline{f_L} = 2\pi \cdot \frac{z}{kT_m} \qquad (24)$$

Als weiterer Parameter muß das Massenträgheitsmoment des durch den Gleichstromantrieb angetriebenen Elements bestimmt werden. Das Massenträgheitsmoment ist hierbei von dem jeweiligen Anwendungsfall abhängig und muß daher in der Regel durch Lernfahrten des Antriebs ermittelt werden.

Für das gesamte auf die Antriebswelle 4 bezogene Massenträgheitsmoment $\theta_{A,ges}$ gilt:

$$\theta_{A,ges} = \theta_{rotor} + \theta_L^* = \theta_{rotor} + \frac{1}{\ddot{u}^2} \theta_L \qquad (25)$$

wobei ü das Übersetzungsverhältnis eines Getriebes ist, und der Index L die auf die Last bezogenen Terme bezeichnet. Die Umrechnung in Bezug auf die Abtriebswelle unter Einbeziehung des bekannten Zusammenhangs

$$\theta_{A,ges} = \frac{1}{\ddot{u}^2} \theta_{L,ges} \qquad (26)$$

liefert

$$\theta_{L,ges} = \ddot{u}^2 \cdot \theta_{rotor} + \theta_L \qquad (27)$$

$\theta_{L,ges}$ bezeichnet das gesamte Massenträgheitsmoment bezüglich der Abtriebswelle. Ist das auf die Abtriebsseite transformierte Trägheitsmoment des Rotors aufgrund eines großen Übersetzungsverhältnisses wesentlich größer als das Trägheitsmoment der Last, kann letzteres vernachlässigt werden. Ansonsten bestimmt sich das Trägheitsmoment wie nachfolgend ausgeführt.

Für die Erfassung des Parameters $\theta_{L,ges}$, der nach der soeben abgeleiteten Beziehung gemäß Gleichung (27) insbesondere eine Abhängigkeit von dem lastseitigen Massenträgheitsmoment aufweist, wird nachfolgend ein lineares Gleichungssystem erstellt, das von der in Gleichung (34) - (41) hergeleiteten Beziehung

$$k_3 \phi T \cdot \frac{1}{n} \sum_{i=1}^{n} I_A(\tau_i) = \overline{M_{W,ges}} T + \theta_{L,ges} \cdot [\omega_L(t_0 + T) - \omega_L(t_0)] \qquad (28)$$

ausgeht.

Betrachtet man die Gleichung (28) im folgenden für zwei unterschiedliche, an dieser Stelle nicht näher festgelegte Intervalle $[t_1, t_1 + T]$ und $[t_2, t_2 + T]$ so ergibt sich:

$$k_3 \phi T \cdot \frac{1}{n} \sum_{i=1}^{n} I_A(\tau_i) = \overline{M_{W,ges}} T + \theta_{L,ges} \cdot [\omega_L(t_1 + T) - \omega_L(t_1)] \qquad (29)$$

mit $t_1 = x_0 < x_1 < ... < x_n = t_1 + T$
und $x_{i-1} < t_i < x_i$

und

$$k_3 \phi T \cdot \frac{1}{n} \sum_{i=1}^{n} I_A(\xi_i) = \overline{M_{W,ges}} T + \theta_{L,ges} \cdot [\omega_L(t_2 + T) - \omega_L(t_2)] \qquad (30)$$

mit $t_2 = y_0 < y_1 < ... < y_n = t_2 + T$
und $y_{i-1} < \xi_i < y_i$

Hierbei wird zwecks der Lösbarkeit des linearen Gleichungssystems die Annahme getroffen, daß das mittlere Widerstandsmoment bezüglich der beiden Intervalle gleich sei. Das unbekannte Widerstandsmoment kann daraufhin eliminiert werden. Das Gleichungssystem läßt sich in der Matrixschreibweise nach folgender Art und Weise formulieren:

$$k_3 \phi T \begin{vmatrix} \frac{1}{n} \sum_{i=1}^{n} I_A(\tau_i) \\ \frac{1}{n} \sum_{i=1}^{n} I_A(\xi_i) \end{vmatrix} = \begin{bmatrix} T & [\omega_L(t_1 + T) - \omega_L(t_1)] \\ T & [\omega_L(t_2 + T) - \omega_L(t_2)] \end{bmatrix} \cdot \begin{bmatrix} \overline{M_{W,ges}} \\ \theta_{L,ges} \end{bmatrix} \qquad (31)$$

Durch die Anwendung der Cramer'schen Determinantenregel zur Lösung des Gleichungssystems ergibt sich für das gesuchte Massenträgheitsmoment:

$$\theta_{L,ges} = k_3 \phi \frac{\begin{vmatrix} \frac{1}{n} \sum_{i=1}^{n} I_A(\tau_i) \\ \frac{1}{n} \sum_{i=1}^{n} I_A(\xi_i) \end{vmatrix}}{\begin{bmatrix} T & [\omega_L(t_1 + T) - \omega_L(t_1)] \\ T & [\omega_L(t_2 + T) - \omega_L(t_2)] \end{bmatrix} \cdot \begin{bmatrix} \overline{M_{W,ges}} \\ \theta_{L,ges} \end{bmatrix}} \qquad (32)$$

Werden die beiden Determinanten in Gleichung (32) in bekannter Weise aufgelöst, so läßt sich der Parameter $\theta_{L,ges}$ näherungsweise gemäß der nachfolgenden Gleichung bestimmen:

$$\theta_{L,ges} \approx k_3 \phi \frac{\frac{1}{n} \sum_{i=1}^{n} I_A(\xi_i) - \frac{1}{n} \sum_{i=1}^{n} I_A(\tau_i)}{\frac{\omega_L(t_2 + T) - \omega_L(t_2)}{T} - \frac{\omega_L(t_1 + T) - \omega_L(t_1)}{T}} \qquad (33)$$

Zur Bestimmung von $\theta_{L,ges}$ wird am Antrieb eine oder mehrere Lernfahrten durchgeführt. Aus dem Vergleich einer Beschleunigungsphase mit einer Phase mit gleichbleibender Geschwindigkeit ergibt sich das Trägheitsmoment nach Gleichung (33) aus dem gemessenen Motorstrom und aus der durch die Auswertung der Inkrementalgeberimpulse ermittelten Beschleunigung.

Die Intervalle $[t_1, t_1 + T]$ und $[t_2, t_2 + T]$ werden während der Lernfahrten derart festgelegt, daß die mittleren Widerstandsmomente bzgl. der beiden Intervalle gleich sind.

In dem meisten Anwendungsfällen kommt aufgrund der nur begrenzt zur Verfügung stehenden Rechenleistung der verwendeten Mikrosteuerungen eine numerisch-iterative Lösung des oben beschriebenen Differentialgleichungssystems nicht in Frage. Nachfolgend wird ein Ansatz zur Lösung des Differentialgleichungssystems beschrieben, bei dem die relevante Differentialgleichung in eine Integralgleichung umgeformt wird.

Ausgangspunkt ist die nachfolgende Differentialgleichung

$$k_2 \phi I_A = \overset{*}{M}_{W,ges} + \theta_{A,ges} \frac{\partial \omega_A}{\partial t} \tag{34}$$

mit

$$\overset{*}{M}_{W,ges} = \overset{*}{M}_L + M_{AR} + \overset{*}{M}_{LR} \tag{35}$$

wobei:

$M^*_L =$ das über das Getriebe auf die Antriebswelle umgerechnete Lastmoment,
$M_{AR} =$ die antriebsseitigen Reibungsmomente,
$M^*_{LR} =$ die auf die Antriebswelle umgerechneten lastseitigen Reibungsmomente.

Eine Umrechnung der Differentialgleichung in Bezug auf die Abtriebswelle liefert die nachfolgende Beziehung

$$k_3 \phi I_A = M_{W,ges} + \theta_{L,ges} \partial \frac{\omega_L}{\partial t} \tag{36}$$

mit

$$M_{W,ges} = \ddot{u} \cdot \overset{*}{M}_{W,ges} = M_L + \ddot{u} \cdot M_{AR} + M_{LR} \tag{37}$$

Wird diese Differentialgleichung über einen noch nicht näher festgelegten Zeitraum T integriert, so ergibt sich zunächst

$$\int_{t_0}^{t_0+T} k_3 \phi I_A(t)\,dt = \int_{t_0}^{t_0+T} M_{W,ges}(t)\,dt + \int_{t_0}^{t_0+T} \theta_{L,ges} \frac{\partial \omega_L(t)}{\partial t}\,dt \tag{38}$$

Das linke Integral der Gleichung (38) kann nun auf die nachfolgend beschriebene Art und Weise behandelt werden.

Durch Einfügen von Teilpunkten $x_i$ mit $i = 0,1... n$ und $t_0 = x_0 < x_1 < ... < x_n = t_0 + T$ kann das Intervall $[t_0, t_0 + T]$ in Teilintervalle zerlegt werden, und das Integral gemäß folgender Gleichung angenähert werden:

$$\int_{t_0}^{t_0+T} k_3 \phi I_A(t)\,dt \approx \sum_{i=1}^{n} k_3 \phi I_A(\tau_i) \cdot [x_i - x_{i-1}] \quad mit \quad x_{i-1} < \tau_i < x_i \tag{39}$$

Bei einer äquidistanten Zerlegung des Intervalls $[t_0, t_0+T]$ gilt der Zusammenhang:

$$x_i - x_{i-1} = \frac{T}{n} \qquad i = 1, \dots, n$$

Unter dieser Voraussetzung läßt sich die Beziehung gemäß der Gleichung (39) vereinfacht schreiben als:

$$\int_{t_0}^{t_0+T} k_3 \phi I_A(t)\, dt = k_3 \phi T \cdot \frac{1}{n} \sum_{i=1}^{n} I_A(\tau_i) \qquad\qquad (40)$$

An dieser Stelle wird darauf hingewiesen, daß der Term $(1/n)\Sigma I_A(\tau_i)$ dem arithmetischen Mittel für ein n-Tupel von Abtastwerten des Ankerstroms $I_A$ entspricht.

Ferner kann festgestellt werden, daß die rechte Seite der Gleichung (40) für n->∞ gegen den Wert des Integrals konvergiert, und daß der durch die Näherung entstehende Fehler in der Regel um so geringer ist, je größer der Wert für n gewählt ist.

Ausgehend von diesen Überlegungen läßt sich die Gleichung (38) schließlich in vereinfachter Form schreiben als

$$k_3 \phi T \cdot \frac{1}{n} \sum_{i=1}^{n} I_A(\tau_i) = \overline{M_{W,ges}}\, T + \theta_{L,ges} \cdot [\omega_L(t_0 + T) - \omega_L(t_0)] \quad (41)$$

mit

$$\overline{M_{W,ges}} = \frac{1}{T} \int_{t_0}^{t_0+T} M_{W,ges}(t)\, dt \qquad\qquad (42)$$

Gemäß der Gleichung (42) beschreibt die Größe $\overline{M_{W,ges}}$ den Mittelwert des Widerstandsmoments für das Intervall $[t_0, t_0 + T]$.

Mittels einer einfachen Umformung der Gleichung 41 läßt sich das mittlere Widerstandsmoment für das Intervall $[t_0, t_0+T]$ näherungsweise gemäß Gleichung (43) bestimmen.

$$\overline{M_{W,ges}} \approx k_3 \phi \cdot \frac{1}{n} \sum_{i=1}^{n} I_A(\tau_i) - \theta_{L,ges} \cdot \frac{\omega_L(t_0+T) - \omega_L(t_0)}{T} \qquad (43)$$

Für eine Bestimmung des mittleren Widerstandsmoments gemäß der abgeleiteten Beziehung aus Gleichung (43) ist eine geeignete meßtechnische Erfassung der Zustandsgrößen, Winkelgeschwindigkeit und Ankerstrom und weiterhin die Kenntnis des Massenträgheitsmoments, das auf den Gleichstromantrieb wirkt, und die Motorkonstante ausreichend.

Das erfindungsgemäße Verfahren erfaßt somit zuerst zwei Zustandsgrößen des Gleichstromantriebes und bestimmt anschließend das an dem Gleichstromantrieb anliegende Widerstandsmoment aus den erfaßten Zustandsgrößen und aus Parametern des Gleichstromantriebes und eines durch den Gleichstromantrieb angetriebenen Elements. Die Zustandsgrößen umfassen die Winkelgeschwindigkeit und den Ankerstrom des Gleichstromantriebs, und die Parameter umfassen das Massenträgheitsmoment des durch den Gleichstromantrieb angetriebenen Elements und die Motorkonstante des Gleichstromantriebs selbst. Die für die Bestimmung des Widerstandsmoments erforderlichen Parameter werden während eines Lernbetriebs des ungestörten Gleichstromantriebs bestimmt und gespeichert. Auf ähnliche Weise wird das vorbestimmte Widerstandsmoment während eines Lernbetriebs des ungestörten Gleichstromantriebs bestimmt und gespeichert.

Gemäß der vorliegenden Erfindung wird das erfindungsgemäße Verfahren in einem Gleichstromantrieb zum Antreiben eines Tores verwendet. In diesem Fall stellt die abnorme Situation das Antreffen eines Hindernisses im Torlaufweg dar und nach dem Feststellen dieser abnormen Situation erfolgt ein Abschalten und/oder ein Reversieren des Gleichstromantriebs.

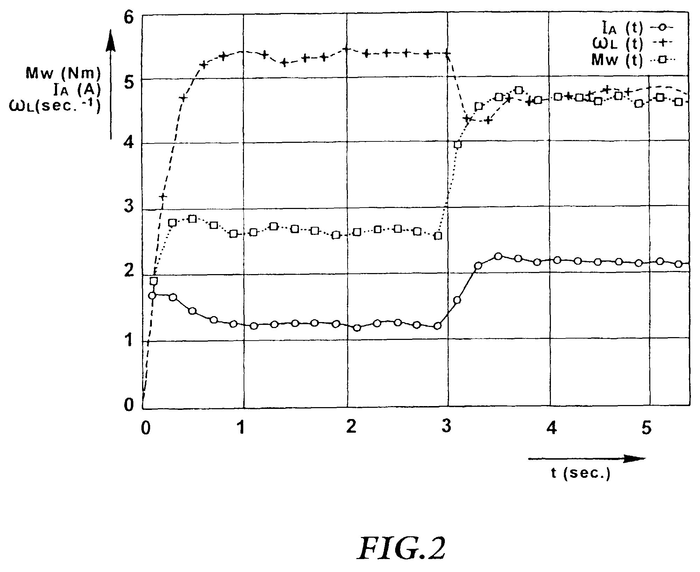

Nachfolgend wird anhand der Fig. 2 bis 4 die Funktionsweise des erfindungsgemäßen Verfahrens näher erläutert. Gemäß dem erfindungsgemäßen Verfahren wird das Auftreten einer abnormen Situation oder einer Gefahrensituation, wie z.B. eine Behinderung oder Blockierung der Antriebsbewegung, aus der resultierenden Erhöhung des Widerstandsmoments erkannt. Hierzu kann das, in der Realität positionsabhängige Widerstandsmonent während einer ungestörten Fahrt ermittelt und abgespeichert werden. Die Steuerung erfolgt nachfolgend durch einen Vergleich der Referenz-Widerstandsmomente und des aktuell ermittelten Widerstandsmoments.

Das am Antrieb erfaßte Widerstandsmoment setzt sich im allgemeinen aus den nachfolgenden drei Teilmomenten zusammen:

- Lastmoment
- lastseitige Reibung
- antriebsseitige Reibung (Motor und Getriebe).

Gemäß der vorliegenden Erfindung wird zusätzlich durch eine entsprechende Auswertung die Kompensation der Reibungseinflüsse ermöglicht, die eine Überwachung des reinen Lastmoments stören würde.

Eine konstante Reibung bzw. eine von der Position abhängige Reibung (abtriebseitig) ist für die Funktion des Verfahrens unkritisch, da die durch diese auftretende Kraft während der Lernfahrt ermittelt und dem Soll-Lastmoment zugerechnet werden kann, bzw. im Soll-Lastmoment enthalten ist.

Ist die auftretende Reibung (antriebs- als auch abtriebsseitig) drehzahlabhängig, können Fahrten mit unterschiedlichen Geschwindigkeiten durchgeführt werden. Die hierbei ermittelten Werte werden in einer Tabelle abgelegt und dann zur Korrektur entsprechend der aktuellen Geschwindigkeit vom ermittelten Lastmoment abgezogen.

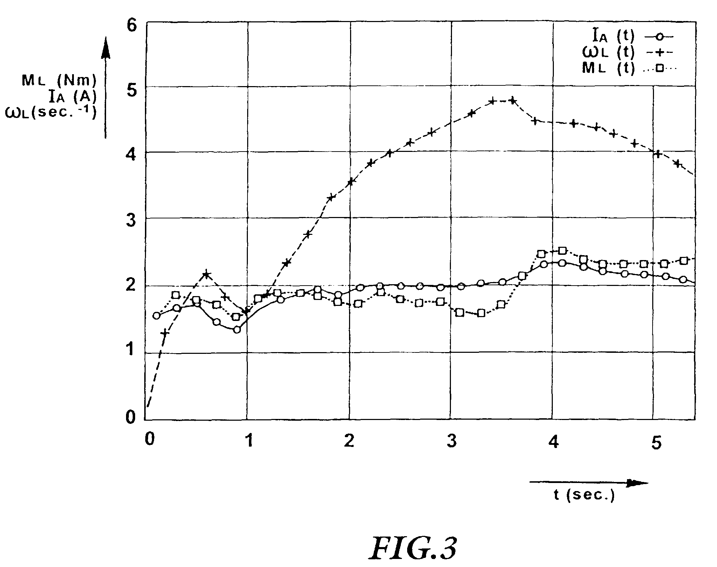

Anhand der Fig. 2 und 3 wird nachfolgend kurz die Funktionsweise des erfindungsgemäßen Verfahrens beschrieben. Die in Fig. 2 und 3 dargestellten Graphen wurden mittels einer Anordnung ermittelt, bei der ein Gleichstrommotor ein Gewicht anhebt. Die Gefahrensituation wurde dadurch simuliert, daß das Gewicht während des Hebevorgangs sprunghaft erhöht wurde. In den Fig. sind jeweils der Motorstrom, die Drehzahl und das ermittelte Widerstandsmoment über der Zeit aufgezeichnet. In Fig. 2 ist ein Sprung zum Zeitpunkt t = 2,8 s zu erkennen, an dem eine Lasterhöhung von 86 N erfolgte. Im Stromverlauf in Fig. 2 ist ebenfalls der Anlaufstrom zu entnehmen, der bei der Berechnung des Lastmoments fast vollständig kompensiert ist. Die in Fig. 2 aufgetragenen Verläufe wurden bei einem Antrieb, der mit konstanter Geschwindigkeit läuft, erfaßt.

In Fig. 3 ist der Verlauf des Motorstroms, des Lastmoments und der Drehgeschwindigkeit über die Zeit aufgezeichnet, wobei in diesem Fall der Gleichstromantrieb nicht mit konstanter Geschwindigkeit betrieben wurde. Wie deutlich aus Fig. 3 zu erkennen ist, funktioniert die Kompensation des Anlaufstroms auch bei nicht-konstanten Geschwindigkeiten. Zum Zeitpunkt t = 3,5 s wurde eine Erhöhung der Last um 40 N durchgeführt. Die Veränderung des Lastmoments ist deutlich zu erkennen, wohingegen der Motorstrom auch durch die Beschleunigungs- und Verzögerungsvorgänge starken Schwankungen unterliegt.

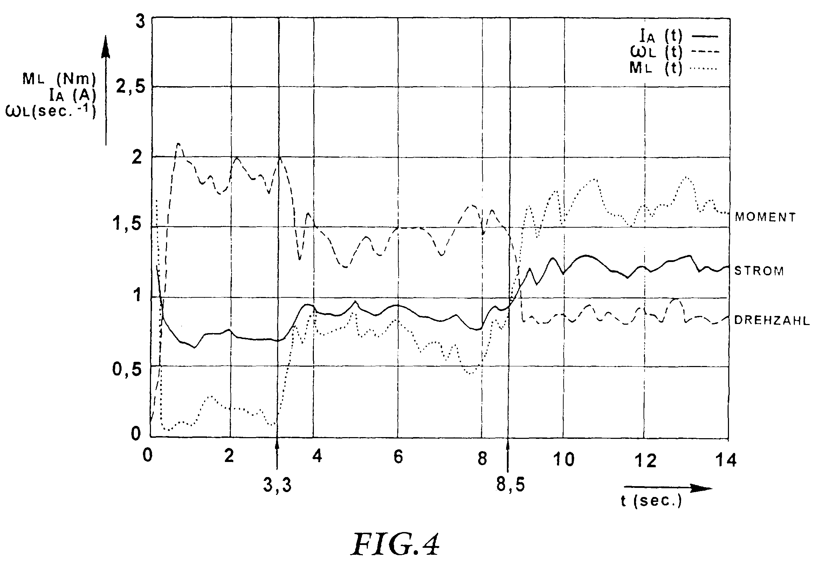

In Fig. 4 sind der Motorstrom, die Drehzahl und das Lastmoment über der Zeit aufgetragen, die während des Betriebs eines Garagenantriebs mit einer sprunghaften Erhöhung des Lastmoments erfaßt wurden. Zu den Zeitpunkten t = 3,3 s und T = 8,5 s wirken an der Torkante zusätzliche Kräfte von jeweils 50 N. Diese zusätzlichen Kräfte sind deutlich an den Verlauf des berechneten Lastmoments $M_L(t)$ erkennbar. Wie der Fig. 4 deutlich zu entnehmen ist, führt der Verlauf des Lastmoments an den entsprechenden Zeitpunkten deutliche Sprünge auf, so daß aus Fig. 4 klar hervorgeht, daß über die Berechnung des Lastmoments eine wesentliche exaktere Erfassung einer Laständerung erfolgen kann, als dies z.B. durch eine Stromüberwachung möglich wäre, wie dies aus dem Verlauf des Motorstroms $I_A(t)$ ohne weiteres hervorgeht.

Es wird darauf hingewiesen, daß sich das erfindungsgemäße Verfahren für alle Arten von Gleichstromantrieben eignet, bei denen die Erfassung einer Lasterhöhung zur Vermeidung von abnormen Situationen erforderlich ist.

**Patentansprüche**

1. Verfahren zum Steuern eines Gleichstromantriebs, insbesondere eines Gleichstromtorantriebs, gekennzeichnet durch folgende Schritte.:

   a) Erfassen von zwei Zustandsgrößen des Gleichstromantriebs;

   b) Bestimmen eines an dem Gleichstromantrieb anliegenden Last- oder Widerstandsmoments ($M_L$) aus den in Schritt a) erfaßten Zustandsgrößen und aus Parametern des Gleichstromantriebs und eines durch den Gleichstromantrieb angetriebenen Elements;

c) Vergleichen des bestimmten Last- oder Widerstandsmoments mit einem vorbestimmten Last- oder Widerstandsmoment; und

d) Feststellen einer abnormen Situation, wenn das bestimmte Last- oder Widerstandsmoment das vorbestimmte Last- oder Widerstandsmoment überschreitet;

wobei das Last- oder Widerstandsmoment ($M_L$) gemäß der nachfolgenden Gleichung bestimmt wird:

$$\overline{M_{W,ges}} \approx k_3 \phi \cdot \frac{1}{n} \sum_{i=1}^{n} I_A(\tau_i) - \theta_{L,ges} \cdot \frac{\omega_L(t_0 + T) - \omega_L(t_0)}{T}$$

mit

| | |
|---|---|
| $M_{W,ges}$ | mittleres Last- oder Widerstandsmoment, |
| $k_3 \Theta$ | Motorkonstante, |
| $I_A$ | Ankerstrom, |
| $\Theta_{L,ges}$ | Massenträgheitsmoment, und |
| $\omega_L$ | Winkelgeschwindigkeit |

2. Verfahren zum Steuern eines Gleichstromantriebs, insbesondere eines Gleichstromtorantriebs, gekennzeichnet durch folgende Schritte.:

a) Erfassen von zwei Zustandsgrößen des Gleichstromantriebs;

b) Bestimmen eines an dem Gleichstromantrieb anliegenden Last- oder Widerstandsmoments ($M_L$) aus den in Schritt a) erfaßten Zustandsgrößen und aus Parametern des Gleichstromantriebs und eines durch den Gleichstromantrieb angetriebenen Elements;

c) Vergleichen des bestimmten Last- oder Widerstandsmoments mit einem vorbestimmten Last- oder Widerstandsmoment; und

d) Feststellen einer abnormen Situation, wenn das bestimmte Last- oder Widerstandsmoment das vorbestimmte Last- oder Widerstandsmoment überschreitet;

wobei das Widerstandsmoment ($M^*_{W,ges}$) durch Lösung der folgenden Differentialgleichungen bestimmt wird:

$$k_2 \phi I_A = M^*_{W,ges} + \theta_{A,ges} \frac{\partial \omega_A}{\partial t}$$

$$U_A = R_A I_A + k_2 \phi \omega_A + L_A \frac{\partial I_A}{\partial t}$$

mit:

| | |
|---|---|
| $I_A$ | Ankerstrom, |
| $U_A$ | Ankerspannung, |
| $R_A$ | Ankerwiderstand, |
| $L_A$ | Ankerinduktivität, |
| $\omega_A$ | Winkelgeschwindigkeit, |
| $\Theta_{A,ges}$ | Massenträgheitsmoment, |
| $M^*_{W,ges}$ | Widerstandsmoment, |
| $\Phi$ | magnetischer Fluß eines einzelnen Pols durch die Spulen, |
| $k_3 \Phi$ | Motorkonstante, |
| $k_2 \Phi I_A = M_I$ | inneres Drehmoment. |

**3.** Verfahren nach Anspruch 1 oder 2, dadurch gekennzeichnet,
daß die Parameter des Gleichstromantriebs und des durch den Gleichstromantrieb angetriebenen Elements während eines Lernbetriebs des ungestörten Gleichstromantriebs bestimmt und gespeichert werden.

**4.** Verfahren nach einem der Ansprüche 1 bis 3, gekennzeichnet durch folgenden Schritt:

e) Abschalten und/oder Reversieren des Gleichstromantriebs, wenn im Schritt d) eine abnorme Situation festgestellt wird.

**5.** Verfahren nach einem der Ansprüche 1 bis 4, dadurch gekennzeichnet,
daß die abnorme Situation im Falle eines Gleichstromtorantriebs das Antreffen eines Hindernisses im Torlaufweg ist.

**6.** Verfahren nach einem der Ansprüche 1 bis 5, dadurch gekennzeichnet,
daß das vorbestimmte Last- oder Widerstandsmoment während eines Lernbetriebs des ungestörten Gleichstromantriebs bestimmt und gespeichert wird.

**Claims**

**1.** A method of controlling a direct-current drive, in particular a direct-current door drive, characterized by the following steps:

a) detecting two state variables of the direct-current drive;

b) determining a load or resistance moment ($M_L$) applied to the direct-current drive on the basis of the state variables detected in step a) and on the basis of parameters of the direct-current drive and of an element driven by said direct-current drive;

c) comparing the load or resistance moment determined with a predetermined load or resistance moment; and

d) determining an abnormal situation when the load or resistance moment determined exceeds the predetermined load or resistance moment;

the load or resistance moment ($M_L$) being determined according the following equation:

$$\overline{M_{W,ges}} \approx k_3\phi \cdot \frac{1}{n}\sum_{i=1}^{n} I_A(\tau_i) - \Theta_{L,ges} \cdot \frac{\omega_L(t_0+T) - \omega_L(t_0)}{T}$$

wherein:

| | |
|---|---|
| $M_{W,ges}$ | mean load or resistance moment, |
| $k_3\Theta$ | motor constant, |
| $I_A$ | armature current, |
| $\Theta_{L,ges}$ | mass moment of inertia, and |
| L | angular velocity |

**2.** A method of controlling a direct-current drive, in particular a direct-current door drive, characterized by the following steps:

a) detecting two state variables of the direct-current drive;

b) determining a load or resistance moment ($M_L$) applied to the direct-current drive on the basis of the state variables detected in step a) and on the basis of parameters of the direct-current drive and of an element driven by said direct-current drive;

c) comparing the load or resistance moment determined with a predetermined load or resistance moment; and

d) determining an abnormal situation when the load or resistance moment determined exceeds the predetermined load or resistance moment;

the load or resistance moment ($M^*_{W,ges}$) being determined by solving the following differential equations:

$$k_2 \phi I_A = M^*_{W,ges} + \theta_{A,ges} \frac{\partial \omega_A}{\partial t}$$

$$U_A = R_A I_A + k_2 \phi \omega_A + L_A \frac{\partial I_A}{\partial t}$$

wherein:

$I_A$ armature current,
$U_A$ armature voltage,
$R_A$ armature resistance,
$L_A$ armature inductance,
A angular velocity,
$\Theta_{A,ges}$ mass moment of inertia,
$M^*_{W,ges}$ resistance moment,
$\Phi$ magnetic flux of a single pole through the coils,
$k_3 \Phi$ motor constant,
$k_2 \Phi I_A = M_I$ inner torque.

3. A method according to claim 1 or 2, characterized in that
the parameters of the direct-current drive and of the element driven by the direct-current drive are determined and stored during a learning operation of the undisturbed direct-current drive.

4. A method according to claim 1 to 3, characterized by the following step:

e) switching off and/or reversing the direct-current drive when an abnormal situation is detected in step d).

5. A method according to one of claims 1 to 4, characterized in that
in the case of a direct-current drive, the abnormal situation is when the door meets with an obstacle on its path of movement.

6. A method according to one of claims 1 to 5, characterized in that
the predetermined load or resistance moment is determined and stored during a learning operation of the undisturbed direct-current drive.

**Revendications**

1. Procédé pour commander un système d'entraînement à courant continu, en particulier un entraînement d'une porte à courant continu, caractérisé par les étapes suivantes :

a) enregistrement de deux grandeurs d'état de l'entraînement à courant continu ;

b) détermination d'un moment de charge ou de résistance ($M_L$) s'appliquant sur l'entraînement à courant continu à partir des grandeurs d'état enregistrées à l'étape a) et à partir de paramètres de l'entraînement à courant continu et d'un élément entraîné par l'entraînement à courant continu,

c) comparaison du moment de charge ou de résistance défini avec un moment de charge ou de résistance prédéfini ; et

d) détermination d'une situation anormale lorsque le moment de charge ou de résistance défini dépasse le moment de charge ou de résistance prédéfini ;

le moment de charge ou de résistance ($M_L$) étant défini selon l'équation ci-dessous :

$$\overline{M_{W,ges}} = k_3\phi \cdot \frac{1}{n}\sum_{i=1}^{n} I_A(\tau_i) - \theta_{L,ges} \cdot \frac{\omega_L(t_0+T) - \omega_L(t_0)}{T}$$

Signification des symboles

$M_{W,ges}$ :     moment de charge ou de résistance moyen
$k_3\theta$ :     constante du moteur
$I_A$ :     courant d'induit,
$\theta_{L,ges}$ :     moment d'inertie de masse, et
$\omega_L$ :     vitesse angulaire

2. Procédé pour commander un système d'entraînement à courant continu, en particulier d'un entraînement d'une porte à courant continu, caractérisé par les étapes suivantes :

a) enregistrement de deux grandeurs d'état de l'entraînement à courant continu ;

b) détermination d'un moment de charge ou de résistance ($M_L$) s'appliquant sur l'entraînement à courant continu à partir des grandeurs d'état enregistrées à l'étape a) et à partir de paramètres de l'entraînement à courant continu et d'un élément entraîné par l'entraînement à courant continu :

c) comparaison du moment de charge ou de résistance défini avec un moment de charge ou de résistance prédéfini ; et

d) détermination d'une situation anormale lorsque le moment de charge ou de résistance défini dépasse le moment de charge ou de résistance prédéfini ;

le moment de résistance ($M^*_{W,ges}$) étant défini par la résolution des équations différentielles suivantes :

$$k_2\phi I_A = M^*_{W,ges} + \theta_{A,ges}\frac{\partial\omega_A}{\partial t}$$

$$U_A = R_A I_A + k_2\phi\omega_A + L_A\frac{\partial I_A}{\partial t}$$

Signification des symboles

$I_A$ :     courant d'induit,
$U_A$ :     tension d'induit,
$R_A$ :     résistance d'induit,
$L_A$ :     inductance de l'induit,
$\omega_A$ :     vitesse angulaire,
$\theta_{A,ges}$ :     moment d'inertie de masse, et
$M^*_{W,ges}$ :     moment de résistance,
$\phi$ :     flux magnétique d'un seul pôle traversant les bobines,
$k_3\phi$ :     constante du moteur,
$k_2\phi I_A = MI$ :     couple interne.

3. Procédé selon la revendication 1 ou 2, caractérisé en ce que les paramètres de l'entraînement à courant continu et de l'élément entraîné par l'entraînement continu sont définis et mémorisés pendant une exploitation d'apprentissage de l'entraînement à courant continu non perturbé.

4. Procédé selon l'une quelconque des revendications 1 à 3, caractérisé par l'étape suivante :

   e) déconnexion et/ou renversement de marche de l'entraînement à courant continu si l'on constate une situation anormale à l'étape d).

5. Procédé selon l'une quelconque des revendications 1 à 4, caractérisé en ce que la situation anormale dans le cas d'un entraînement à courant continu est l'arrivée d'un obstacle dans le parcours de la porte.

6. Procédé selon l'une quelconque des revendications 1 à 5, caractérisé en ce que le moment prédéfini de charge ou de résistance est défini et mémorisé pendant une exploitation d'apprentissage de l'entraînement à courant continu non perturbé.

*FIG.1*

*FIG.2*

**FIG.3**

*FIG.4*

FIG.5